(19) 

**Europäisches Patentamt**
**European Patent Office**
**Office européen des brevets**

(11) **EP 2 757 505 A1**

(12) **EUROPEAN PATENT APPLICATION**

(43) Date of publication:
**23.07.2014 Bulletin 2014/30**

(51) Int Cl.:
**G06N 5/00** *(2006.01)*  **G06F 17/30** *(2006.01)*

(21) Application number: **14152198.9**

(22) Date of filing: **22.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.01.2013 IT RM20130040**

(71) Applicant: **Skymedia Srl**
**67061 Carsoli (AQ) (IT)**

(72) Inventor: **Lucangeli, Danilo**
**I-67061 Carsoli (AQ) (IT)**

(74) Representative: **Sarpi, Maurizio et al**
**Studio Ferrario srl**
**Via Collina 36**
**00187 Roma (IT)**

(54) **Method and corresponding computer implemented system for the retrieval of documents from a management and classification system with relative and absolute importance weighting of the document sources**

(57) A method for ordering documents based upon the weight of the sources, implemented on a computer, suitable for producing a ranking of results (from a query) that, given the same certain conditions of significance (relevance with the query, date, language, normative scenario), reflects also the data of reliability/significance of the sources of the documents, envisages recourse to a mathematical model based upon oriented graphs that enables the analyst, via the algorithms that are provided, to highlight and formalize all the knowledge introduced into the incremental process of estimation of the weights, eliminating the possibility of introducing subjective inconsistencies.

Figure 3

**Description**

**BRIEF SUMMARY OF THE INVENTION**

In document retrieval it frequently happens that it is necessary to carry out searches using tools for retrieval of knowledge from documents. Even though said tools are rather powerful and effective, they do not in general take into account certain specific features of the domains of application where there may be defined, in a natural way, different levels of reliability or authority of the documents on the basis of the documental source from which they arrive. It thus becomes useful to introduce in a formal way a source-weighting system that can capture the aforesaid specific features. In this connection, proposed herein is a method, implemented via computer, based upon oriented graphs, which makes it possible to acquire data on the reliability/authority of the sources in a formal and non-contradictory way. The operation of transitive triangulation is introduced, which is in a certain way complementary to transitive closure, and two algorithms are presented that implement it, in an incremental and offline way.

The above method for weighting sources finds application in all the practical cases in which there arises the need to establish a priority of importance, between sources of knowledge, not based simply on the (semantic) relevance of the contents present in a documental management system with the query made by a user, but that will take into account other characteristics of a specific domain of knowledge. For instance, in the juridical field the importance of a court decision has a weight by virtue of the degree of judgement that has produced it in time. Another example is in the field of technical support to users of complex technical procedures and tools, where the weight of the knowledge is determined by the reliability of the author of the technical documents that are consulted: a document drawn up by the producer of the tool or by the author of the technological procedure has greater weight than other documents regarding the same topic, and so forth.

**PRIOR ART**

Modern information retrieval is an area of information technology that studies the techniques for extracting from fixed information assets $P$, starting from a query $q$, the most relevant data for $q$ contained in $P$. In the specific case where $P$ consists of a collection of text documents, and also $q$ is a text, this procedure is referred to as "document (or text) retrieval". An excellent introduction to modern information retrieval is the text by Manning et al. (Christopher D. Manning, Prabhakar Raghavan, and Hinrich Schütze, Introduction to Information Retrieval, Cambridge University Press, 2008.)

There exist today numerous techniques for information retrieval, based upon models of various types (set-theoretic, algebraic, probabilistic, with or without interdependence of terms, etc.) that have enabled development of effective document-retrieval tools, all having the characteristic of working on wide conceptual categories, for example, search for contents on the Web or on a documental system, or in a database. The limit of such tools is that they are unable to take into account the specific features of some domains of application.

In document retrieval, it may happen that the documental assets are constituted by a huge number of documents coming from diversified sources, which do not necessarily all have the same importance, reliability, or significance; consider, for example, the different weight to be attributed to the decisions of the court of law, of the court of appeal, or of the supreme court of cassation. Another example is a troubleshooting procedure found in the user manual of a device or in a generic blog.

Hence, in many cases the technologies used for document retrieval do not manage to take into account the diversification of the documental sources, which have different levels of reliability or significance. In these cases, to favour a more suitable document retrieval, it may be convenient to use techniques for managing explicitly the concept of "weight of the source", defined and quantified for applying corrections to the ranking produced by a search or retrieval engine that is unaware of the diversification.

In the present invention, a method for ordering documents is described based upon the weight of the sources, implemented on computers, and suitable for producing a ranking of results (from a query) that, certain conditions of significance being equal (relevance with the query, date, language, normative scenario), reflects also the data of reliability/significance of the sources of the documents.

Of course, in the most general case of a ranking of results produced by the document-retrieval engine, it is necessary to combine this with the data of significance of the sources, using a composition formula that we may assume as being, to a first approximation, a linear combination of two rankings. The approach may be easily extended for capturing further concepts expressed by metadata that could be particularly significant in some contexts, such as for example the date of creation or of saving of a document or the place of drafting.

The main reason why recourse is made to a mathematical model based upon oriented graphs is the difficulty of defining a consistent and complete source-weighting system.

A better understanding of the description will be obtained with reference to the attached plates of drawings that illustrate by way of example the traditional use of a graph and its use according to the invention. In particular:

Figure 1 shows a classic example of application in which, given a directed acyclic graph or DAG in (a), it is found that the induced transitive arc *(u, w)* cannot assume a uniquely determined weight;

Figures 2a and 2b highlight the difficulty in the triangulation of a TE-UC-digraph, whilst Figures 2c-2f show its incremental construction and triangulation;

Figure 3 shows the interconnection of two weakly connected components: in particular, highlighted in Figure 3a is the arc while it is being inserted, illustrated in Figure 3b are the transitive arcs that derive therefrom, and finally, illustrated in Figure 3c are examples of arcs induced subsequently, whether triangular ones or transitive ones.

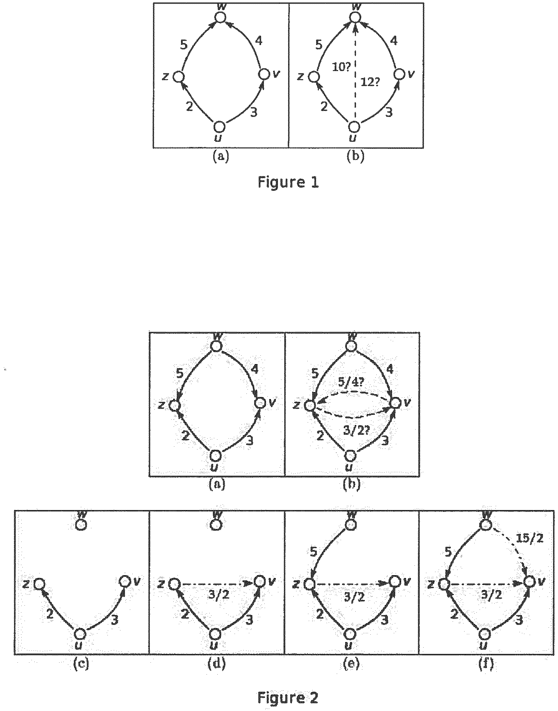

With reference to the above figures, normally no weighting function is available, and the analysts must resort to procedures of detection/estimation of the weights that are not systematic and are subject to inconsistency, as will be shown hereinafter, where the classic example of application of Figure 1 is discussed. Unlike what is known, the method of weighting of the sources described, via the algorithms that are provided herein, enables the analyst to highlight and formalize all the knowledge introduced into the incremental process of estimation of the weights, eliminating the possibility of introducing any subjective inconsistency.

In the table below, the main terminology used hereinafter in the description is defined.

DEFINITIONS

| | |
|---|---|
| DOCUMENT RETRIEVAL | Search functions made available usually by information systems for document management and classification that afford users the possibility of submitting queries to obtain one or more documents as result |
| WEIGHTING SYSTEM | (for the sources) Weakly or strongly connected component of a transitive triangulation between graphs |
| DIRECTED GRAPH | A graph is a set of elements referred to as "nodes" or "vertices" connected together by arcs or edges. The graph is said to be "directed" if it is without multiarcs and loops |
| TRIANGULAR EQUALITY | Given three sources u, v, z combined in a directed graph structure on the basis of the relation of "weight" for each pair, once the weights (u, v) and (v, z) have been established, the weight of (u, z) is the product (u, v) * (v, z) |
| TRANSITIVE CLOSURE | Extension of the transitive equality to all the nodes constituting the directed graph by means of iteration of the product (see previous definition) |
| TRANSITIVE TRIANGULATION | Enrichment of the transitive closure, between components of weakly connected graphs, as well as the algorithm claimed by the present patent |
| MATHEMATICAL MODEL | Model constructed using the language and tools of mathematics. Its purpose is to represent as rigorously as possible a given theorem or a phenomenon |
| TOPOLOGICAL ORDERING | In graph theory, a topological ordering is a linear ordering of all the vertices of a directed acyclic graph (DAG) |
| WEIGHT OF THE SOURCE | Importance of a source of information in relation to other possible sources present in the same information assets |
| RELEVANCE | Degree or percentile of reliability between the contents of two distinct information sources; for example, a document may be more or less relevant, as compared to a second document, according to the degree of conceptual similitude between the two |
| SEMANTICS | Part of linguistics that studies the meaning of words and sets of words |
| PREORDER (pre-ordered set or proset) | Reflexive and transitive binary relation |
| PARTIAL ORDER (partially ordered set or poset) | Binary relation described through a directed graph |
| DIGRAPH | Directed graph |
| UPPER BOUND | Maximum value of the computational weight of an algorithm |

## TECHNICAL DESCRIPTION OF THE INVENTION

### Procedure

Before introducing the mathematical model of weighting of the documental sources, the process is described from the standpoint of the user in order to illustrate the advantage produced in the analysis of reliability and significance of the results of a query.

STEP 1: There exists a management and classification system, either semantic or statistical, of documents. Let $P$ be the entire documental assets present within the system; each document in $P$ belongs to a source having peculiar characteristics, such as: denomination, e.g., administrative court; type, e.g., court decisions and maxims; field, e.g., juridico-legal; competent territory, e.g., regional; reference period, e.g., from date x to date y; and so forth.

A user of the system needs to submit queries regarding the assets $P$, and the documental system is able to order the results of the queries only on the basis of the reference period and the percentage of relevance between the text of the result and that of the query.

In order to use the "weight", i.e., the importance, of the other metadata that characterize the source of the documents, i.e., field, type, territorial competence, etc., the user carries out a subjective analysis and establishes binary relations (i.e., "two-by-two relations") betwen all the sources that have been defined and can be queried in the documental system. The subjective analysis gives rise to a series of numeric values; for example, the relation of importance between one source $F_1$ and another $F_2$, in relation to the type, is:

**"$F_1 \rightarrow F_2$ = 2.00"**, and reads as: the *source $F_1$ weighs half of the source $F_2$*. The arrow always points from the least important source to the most important source.

When the user has finished listing, two by two, the relations between the sources, in relation to one or more characteristics, he enters his own subjective estimates in a matrix of input fields, presented by means of a software implementation of the source-weighting system. This is a <u>configuration</u> of the relations between pairs of sources, which is stored by the weighting system.

STEP 2: As soon as the configuration has been stored, in an automatic way, the weighting system, implemented by means of computer-processing algorithms, carries out the following operations on the configuration:

a) it verifies that all the pairs that can be combined have at least one oriented relation;
b) it verifies that there are no loops in any of the pairs, i.e., a double incongruent relation, e.g., **"$F_1 \rightarrow F_2$ = 2.00"** and **"$F_2 \rightarrow F_1$ = 2.00"**, which is an error;
c) it corrects all the wrong relations;
d) it enters calculated relations where they are missing;
e) <u>above all</u>: it substitutes wrong subjective values, present in the configuration, with new weighted objective values, thus eliminating any incongruence.

At this point, the weighting system has interconnected, with directed and acyclic relations, all the sources present in the configuration. If the analyst user has neglected one or more sources present in the documental system, but the weighting system has already calculated for them weighted and objective relations, it combines the latter with the configuration entered by the user, using algorithmic techniques of interconnection between sets of sources, until a so-called "complete transitive triangulation" is created, i.e., a finite weighting system between all the sources. This will then be used to weight the results of the queries submitted by users to the assets $P$.

STEP 3: When a user submits queries to the assets $P$ by means of the querying functions of the documental management system, a certain finite number of results (i.e., documents that emerge as relevant) is retrieved from the documental system and, before it is returned to the user, the sources to which the results obtained belong are identified, and an ordering is automatically carried out on them on the basis of the weighting system configured. This ordering is combined with the other criteria typical of the documental management system, first of all the semantic relevance and, finally, a list of results thus ordered is displayed for the user by means of the display functions of the documental management system.

The three steps so far described illustrate only one of the possible applications of the weighted retrieval method claimed by the invention. The system for ordering documents resulting from a query, by means of weighting of the sources, is hence totally independent of any documental management and classification system and is thus suited for being integrated into any existing knowledge-management system.

There follows the formally rigorous description of the mathematical model that leads to the algorithms for weighting and ordering the sources.

**Basic concepts**

Let *V* be a finite and non-empty set of sources. The mathematical model for evaluating the weight of the source is based upon the introduction of a pre-order on the set *V* (reflexive and transitive binary relation; see, for example, Bernd S. W. Schroder, "Ordered sets: An introduction", Birkhauser, 2003).

The pre-order will be rendered more expressive through the definition of a partial weighting function *P*: $V^2 \mapsto IR^+$, which, given two sources *u* and *v*, yields the positive real (*u,v*), which expresses the ratio between the weight of the source *v* and the weight of the source *u*. In other words, the higher the value of (*u,v*), the greater the weight of the source *v* with respect to that of the source *u*.

For evident intuitive reasons, the weighting function *P* must present three important properties.

1. Reflectivity: for each source $v \in V$, (*v,v*) = 1.
2. Reciprocity: if *u* and *v* are two sources in *V*, and if *(u,v)* is defined, then *(v,u)* must also be defined, given that *(u,v)·(v,u)* =1.
3. Triangular equality (TE): if *u*, *v* and *z* are three sources, and if *(u,v)*, *(v,z)* and *(u,z)* are defined, then *(u,z)=(u,v)·(v,z)*.

We shall prove in what follows that there exist non-trivial weightings that satisfy the three properties.

**Definition 1 (non-triviality)** A weighting function $P : V^2 \mapsto IR^+$ is said to be non-trivial if there exists a pair $(u,v) \in V^2$ such that *(u,v)≠1*.

Note that a non-trivial weighting function is hence defined on at least one pair.

Hence, in the set *V* we introduce the pre-order, denoted by the symbol ≤, defined as follows: given the pair $(u,v) \in V^2$, *u≤v⇔(u,v)≥1*. From a terminological standpoint, the pair *(V,≤)* characterizes a proset (pre-ordered set): in fact, it may be immediately verified that the relation ≤ is reflexive and transitive, whereas it does not possess the antisymmetric property.

For practical purposes, instead of the function *P*, we shall use the function *p*, which represents the following restriction of *P*:

$$p(u,v) = \left\{ \begin{array}{ll} (u,v) & if\ (u,v) \geq 1 \\ undefined & otherwise \end{array} \right\}$$

As is known, each binary relation can be described through a directed graph (digraph), the vertices (or nodes) of which are the elements of the set and the arcs of which represent the constraints of precedence between vertices induced by the partial order. It may readily be verified that a digraph representing a pre-order does not contain cycles, unless these are exclusively made up of arcs of unit weight. We shall call this type of digraph "UC-digraph" *(unit-cycle digraph)*.

In document-retrieval applications, frequently the weighting *P* is not known and must be determined through an incremental process that requires an analyst to estimate the values of *P* on some pairs (*u,v*). On account of the TE property, the values of *P* cannot be estimated separately pair by pair; instead, it is necessary, for each new estimation to take into account the consequences induced by the previous choices, continuing to keep satisfied the TE property; this process, for a number of sources greater than just a few units, necessarily requires an algorithmic support.

The metaphor of "incremental updatings" of the function *P* is represented through the concept of extension (or analytic prolongation, opposite to the concept of restriction) of a function. Of course, what has been said for the function *P* applies also to its restriction *p* introduced previously.

**Mathematical model**

We shall model the problem of the evaluation of the weight of the source through a UC-digraph *G* weighted on the arcs. The graph *G* is defined as an orderly triad (*V,E,p*) in which *V* is the (finite, non-empty) set of the sources (or vertices, or nodes), $E \subseteq V^2$ is a set of oriented arcs, and $p : E [1,+\infty) \subset IR$ is the function previously defined. The interpretation to be given to this mathematical model is the following: if the arc *(v_i,v_j)* has a weight $w_{i,j} = p(v_i,v_j)$, then the ratio between the weight of the source $v_i$ and that of the source $v_j$ is equal to $w_{i,j}$. On account of the characteristic of the weighting function, the arcs of the graph are always oriented so as not to connect one source to another source having a lower weight. The pre-order is by construction reflexive, but, since it is not in itself interesting to represent the pairs *(v,v)* thereof, the corresponding UC-digraph that we shall consider will not contain self-loops. We shall designate a UC-digraph weighted with a weight function on the arcs with values in *[1,+∞)* that satisfies TE with the acronym TE-UC-digraph, and we shall write that a TE-UC-digraph is defined as a triad *(V,E,p)*, with obvious meaning of the symbols. In a TE-UC-digraph we

have $0 \leq m \leq n(n - 1)$, with $|V| = n$ and $|E| = m$.

If there does not exist an arc oriented from a vertex $v_h$ to a vertex $v_k$, then one of the following conditions obtains:

a) The ratio between the weights of the sources $v_h$ and $v_k$ is not known, and it is not possible to derive it by transitivity or by participation in a relation of transitivity (as transitive triangulator arc, see Sect. 3). In this case, there does not even exist the arc from $v_k$ to $v_h$.

b) The ratio between the weights of the sources $v_h$ and $v_k$ is not known, but it is possible to derive it by transitivity or by participation in a relation of transitivity. In this case, it is possible to "complete" the graph by adding one of the arcs $(v_h, v_k)$ and $(v_k, v_h)$ (as explained in Section 3, where the transitive triangulations are introduced).

c) The source $v_h$ has a weight less than that of the source $v_k$. In this case, there exists the arc $(v_k, v_h)$.

d) [irreflexive version] The source $v_h$ has a weight equal to that of the source $v_k$. In this case, there does not even exist the arc $(v_k, v_h)$.

The discussion just developed enables the following preliminary property to be established.

**Property 2(ratio between the weights of two sources)** Given a TE-UC-digraph $G = (V,E,p)$, each arc $(u,v) \in E$ represents the ratios between the weights of the sources $u$ and $v$, with $(u, v) = p(u, v)$ and $(v,u) = 1/p(u,v)$.

Whereas each UC-digraph describes a precise proset, a proset can be described in principle by a number of UC-digraphs, which all have the same transitive closure (the transitive closure of a digraph $G = (V,E)$ is a digraph, supergraph of $G$, defined as $G^+ = (V,E^+)$, where there exists in $G$ a path from $u$ to $v$; given a digraph $G$, $G^+$ is unique) and which differ from one another for the presence/absence of transitive arcs. In the case of a TE-UC-digraph $G$, we could ask ourselves whether it is possible to extend the weight function $p$ to a *function $p^+$* that weights the arcs of $G^+$, respecting TE, where $G^+$ denotes the transitive closure of $G$. The answer is in general "No", as may be seen immediately in the example of Figure 1.

With reference to the graph illustrated in Figure 1(a), the weight to be attributed to the transitive arc $(u,w)$ is not unique, and Figure 1(b) shows the two possibilities. In practice, there does not exist a weight that can be attributed to $(u,w)$ so that TE is satisfied.

It thus becomes interesting to identify the subclass of the TE-UC-digraphs for which it is possible to extend the weight function to the transitive closure so that it will still respect TE. For this purpose, we posit the following definition.

**Definition 3 (path)** A sequence of vertices $\pi = (v_0, v_1, ..., v_{\S\text{¤}})$ is a path if $G$ contains the arcs $(v_i, v_{i+1})$, $i = 0, 1, ..., \S\text{¤}-1$. The length of $\pi$ is the value $len (\pi) = \Pi_{\S\text{¤}-1}^{\wedge} i=0 \, p(v_i, v_{i+1})$; the size of $\pi$ is the value $|\pi| = \S\text{¤}$.

The subclass of the TE-UC-digraphs for which it is possible to extend the weight function to the transitive closure so that it still respects TE is characterized by the following fundamental results.

**Theorem 4 (extendibility)** Given a UC-digraph $G=(V,E,p)$, there exists an extension of $p$ to the transitive closure of $G$ if and only if for each pair $(u,v) \in V^2$ all the paths from $u$ to $v$ have the same length.

Demonstration: (Part $\Rightarrow$) We shall prove that if there exists an extension of $p$ to the transitive closure of $G$ that satisfies TE, then for each pair of vertices $(u,v) \in V^2$ all the paths from $u$ to $v$ have the same length. Let $p^+$ be this extension and assume *ab absurdo* that there exist two distinct vertices $x$ and $y$ connected by two distinct paths $\pi'$ and $\pi''$, with respective lengths $\rho'$ and $\rho''$, where $\rho' \neq \rho''$. Clearly, present in the transitive closure $G^+$ is the arc $(x,y)$, and since $p$ admits of an extension $p^+$ to $G^+$ that respects TE, we must have $p^+(x,y)=\rho'$, for the TE constraints in regard to the arcs of $\pi'$ to be respected. But we must also have $p^+(x,y)=\rho''$, for the TE constraints in regard to the arcs of $\pi''$ to be respected. It is hence absurd to assume that $\rho' \neq \rho''$.

(Part $\Leftarrow$) We shall now demonstrate that if all the paths between each pair of distinct vertices $x$ and $y$ have the same length, then the weighting $p$ admits of an extension $p^+$ to the transitive closure $G^+$ that respects TE. In this connection, it is sufficient to adopt an incremental procedure that introduces, one at a time, the arcs of $G^+$ that do not belong to $G$. To each of them it is sufficient to assign a weighting that continues to satisfy TE. We shall consider one of these arcs, designating it as $(x,y)$. Since $(x,y)$ belongs to $G^+$ but not to $G$, there exist in $G$ $r>0$ paths from $x$ to $y$ , all of which have by hypothesis the same length $d$. We shall now verify that the choice $p^+(x,y)=d$ satisfies TE. If between the $r$ paths from $x$ to $y$ there is not even one made up of two arcs, then TE is automatically satisfied in so far as its premise is false.

Conversely, for each path from $x$ to $y$ made up of two arcs, seeing that by hypothesis its length is always equal to $d$, the equality continues to be verified by attributing a weight $d$ to the arc $(x,y)$, which by definition entails respect of the TE property.

A TE-UC-digraph that satisfies the condition referred to in Theorem 4 is called "TE-extendible". The extended weighting function is called "TE-extension of $p$". Note that if $G$ is TE-extendible, then $G$ satisfies TE.

The identification of a necessary and sufficient condition for a transitive closure to be a TE-UC-digraph does not yet enable development of a tool useful for evaluation of the "weight of the source" as emerges from the following example. With reference to Figure 2(a), we shall consider the case of four sources $u$, $v$, $w$ and $z$, with corresponding weights represented. The graph is a TE-UC-digraph already transitively closed.

In the case where it becomes necessary to compare the weights of the sources z and v, the absence of arcs would seem to indicate the incomparability of the two sources. And yet, observing the relations between the two sources and the vertices *u*, it may be immediately deduced that *v* is more important than *z*, which furnishes an argument against the incomparability of *z* and *v*; in particular, *v* has a weight that is three times that of *u*, whereas *z* has a weight that is twice that of *u*. It would hence seem to be legitimate to expect the weight of *v*, with respect to *z*, to be equal to 3/2, which would result in the addition of a further arc (*z*,*v*) with weight 3/2. This would satisfy TE on the vertices *u*, *v* and *z*. On the other hand, if we attempt a similar reasoning, but comparing *z* and *v* with the source *w*, we would come to deem expedient to introduce an arc (*v*,*z*), with weight 5/4. To some extent, the graph in Figure still presents contradictory aspects (Figure 2(b)). It is obvious that the transitive closure of the UC-digraph makes it possible to take into account the relations between the sources that have not directly been rendered explicit but can be derived by transitivity thanks to triangular equality. From an expressive standpoint, however, this does not enable explicit capture of all the information represented by the weighting. The graph illustrated in Figure 2(a) is in a certain sense "wrong" because it introduces a contradiction in an application scenario where contradictions have no reason to exist. If the graph had been constructed in an incremental way, by introducing one weighted arc at a time, it would have been possible to arrive at a different graph, without any contradictions. Assume, for example, that the incremental procedure had envisaged, in order, insertion of (*u*,*z*), (*u*,*v*), (*w*,*z*) and (*w*,*v*). After insertion of the first two arcs (Figure 2(c)), the considerations developed previously would have highlighted the expedience of inserting also an arc (*z*,*v*) with weight 3/2 (Figure 2(d)). Hence, proceeding with the addition of (*w*,*z*) (Figure 2(e)), it would have been "compulsory" to insert a (transitive) arc (*w*,*v*) with weight 15/2 (Figure 2(f)). The resulting graph is a TE-UC-digraph that represents all the knowledge induced by the weighting function. It should be noted that, if the order of insertion of the arcs had been (*w*,*z*), (*w*,*v*), (*u*,*z*) and (*u*,*v*), the final result could have been different. Choosing one order rather than another corresponds to recognising evident aspects of the application scenario, then enabling explicit representation of all the consequences of the choice adopted, eliminating the possibility of contradictions in the graph. An arc expressly inserted for perfecting the representation of the knowledge, such as the arc (*z*,*v*), is referred to as "transitive triangulator". We shall hence introduce the notion of transitive triangulation, a supergraph of the transitive closure, designated by $G^{++}$.

**Transitive triangulation**

Given a digraph *G*=(*V*,*E*,*p*), weighted on the arcs with real weights of not less than 1, we shall first introduce the following definition:

**Definition 5 (chain)** A sequence of vertices $\sigma = (v_0, v_1, ..., v_{\S\text{¤}})$, §¤≥1, is a chain if, for *i* = 0,1,..., §¤-1, $((v_i, v_{i+1}) \in E) \vee ((v_{i+1}, v_i) \in E)$. The length of σ is the value §¤-1$\overline{p}(v_i, v_{i+1})$, where $\overline{p}$ is a function derived from *p*:

$$\overline{p}(u,v) = \begin{cases} p(u,v) & if\ (u,v) \in E \\ 1/\,p(u,v) & if\ (v,u) \in E \end{cases}$$

The size of σ is the value |σ|=§¤.

A path is of course a chain, and the length of the path coincides with the length of the chain and is greater than 1. A chain, instead, is not necessarily a path, and its length may even not be greater than 1.

An interesting property of chains is described in what follows and is an immediate consequence of Definition 5: **Property 6 (sequence)** Given a chain σ=($v_0, v_1, ..., v_{\S\text{¤}}$), §¤≥1, the sequence $\tilde{\sigma}$=($v_{\S\text{¤}}, v_{\S\text{¤}-1}, ..., v_0$) is a chain and is $(\tilde{\sigma})$=1/(σσ.

We shall now introduce the notion of TT-extendibility.

**Definition 7 (TT-extendibility)** A UC-digraph *G* = (*V*,*E*,*p*) is said to be TT-extendible if, for each pair of vertices *u* and *v* in *V*, all the chains from *u* to *v* have the same length.

Of course, a TT-extendible UC-digraph is also TE-extendible so that TT-extendibility is a stronger property than TE-extendibility. Furthermore, it may at once be verified that a TT-extendible UC-digraph

$$E' = \left\{ (u,v) \in V^2 \mid (u,v) \notin E^+ \right.$$

satisfies TE.

The following result demonstrates the importance of the concept of chain, the length of which describes the ratio between the weights of the sources at its extremes.

**Lemma 8 (comparability)** If in a TT-extendible UC-digraph there exists a chain $\sigma$ from a vertex $u$ to a vertex $v$, then $P(u,v)=len(\sigma e)$.

Demonstration: The existence of a chain $\sigma=(x_0,x_1,...,x_k)$, for a some $k \geq 1$ and $x_0 = u$, $x_k = v$, implies the comparability of the two sources. In fact, thanks to Property 2, the individual arcs that define it represent the relative weights between the sources on which said arcs are incident and enable determination of $(x_i,x_{i+1})$, $i = 0,1,...,k$-1. These weights may be determined by applying triangular equality to determine $P(u,v)$, exploiting the product of the sequence $\Pi k$-$1_{\wedge i=0}\overline{p}(x_i,x_{i+1})$, which, on the basis of Definition 5, is the length of $\sigma$.

Thanks to the TT-extendibility assumed as hypothesis, the reasoning that has been developed maintains its validity in the case where there are a number of different chains from $u$ to $v$.

We shall now define the notion of **<u>transitive triangulation. Definition 9 (transitive triangulation)</u>** Given a digraph TE-UC-digraph, TE-extendible G = *(V, E, p)* and designated by $G^+$ = *(V, $E^+$, $p^+$)* its transitive closure, with weighting function $p^+$, TE-extension of p, we define as "transitive triangulation" the graph $G^{++}$ = *(V, $E^{++}$, $p^{++}$)*, where $E^{++}$ = $E^+UE'$ with E'=$\{(u,v)\in V^2|(u,v)\notin E^+$ and there exists in $E^+$ a chain $\sigma$ from u to v with $len(\sigma) >$ = 1$\}$, The function $p^{++}$ coincides with $p^+$ on the arcs of $E^+$, while, for each arc (u, v)$\in E'$, it is defined as $p^+$ (u, v) = $len(\sigma)$, $\sigma$ being a chain from u to v. Each arc *(u, v)* added to $E^+$ is referred to as "transitive triangulator arc".

The above definition defines the conditions that enable introduction of transitive triangulators, but does not guarantee that the resulting digraph satisfies TE, nor that the weight of the transitive triangulator is defined uniquely. For instance, with reference to Figure 2(a), the digraph illustrated therein is TE-extendible, but Definition 9 entails the addition of (z; v) and (v; z) (see Figure 2(b)), on account of the presence of the chains (z; u; v) and (z; w; v)), respectively. The resulting graph does not respect TE. If in the graph of Figure 2 (a) the weights of (w; z) and (w; v) were to be exchanged, to obtain p(w; z) = 4 and p (w; v) = 5, Definition 9 would have caused insertion of (z; v) but with weight 5 = 4 or 3 = 2, according to the chain considered. There hence arises the natural question of establishing in what conditions Definition 9 enables a TE-digraph to be obtained with weights of the arcs uniquely determined. The answer is supplied by the following result.

**Theorem 10 (transitive triangulator)** The transitive triangulation of a TE-extendible digraph G = (V, E, p) has uniquely determined weights and satisfies TE if and only if G is TT-extendible.

Demonstration. (Part =>) It follows directly from the considerations developed following upon Definition 9.

(Part <= ) We shall prove that the TT-extendibility of G implies that its transitive triangulation has uniquely determined weights and satisfies TE; we shall prove first the uniqueness of the weighting. Since G is a TE-digraph, from Theorem 4 the weighting of the transitive arcs is unique. Furthermore, since the weighting of each transitive-triangulator arc *(u, v)* is defined as the length of a chain from u to v, and since all the chains from $u$ to v have the same length in a TT-extendible graph, it follows that the weighting of *(u, v),* however calculated, is unique. We shall now prove that the TT-extendiblety of G implies that $G^{++}$ satisfies TE. Let us assume *ab absurdo* that this is not true and that there exist in $G^{++}$ three arcs (u, v), (v, w) and (u, w) such that $p^{++}$(u, w) is different from $p^{++}$(u, v) - $p^{++}$(v, w), i.e., two different chains between the same pair of nodes, which have a different length. Hence, we shall have that the graph G is TT-extendible (by hypothesis) and the graph $G^{++}$ is not TT-extendible, which would mean that the insertion of transitive arcs or transitive triangulators has removed the property of TT-extendibility. This is not, however, possible either for the transitive arcs (see Theorem 4) or for the transitive triangulators (see Definition 9).

From the definition given, there immediately follows the property below.

**Property 11 (total pre-order)**. Each weakly connected component $\psi$ of a transitive triangulation is a total pre-order. (All the distinct pairs of vertices are comparable. In this case, the simple graph underlying the weakly connected component is complete.)

Furthermore, each weakly connected component $\psi$ of a transitive triangulation describes in a complete way the weights of the sources present in $\psi$, in the sense specified by the ensuing Theorem 12. In what follows, a weakly connected component of a transitive triangulation will be also referred to as "weighting system" (for weighting of the sources present in the component).

**Theorem 12.** Let $G^{++}$ = *(V,$E^{++}$, $p^{++}$)* be a weakly connected transitive triangulation. Then, for each pair of sources $(u,v)\in V^2$, it is possible to determine the corresponding weighting value $P(u,v)$.

Demonstration: The weak connection implies the existence of a chain $\sigma$ from $u$ to $v$, so that, by Lemma 8, $P(u,v)=len(\sigma)$.

**Absolute weighting of the vertices**

It now appears useful to evaluate the relations existing between the particular weighting defined on the arcs of the TT-extendible digraphs and possible weightings that may be defined on the vertices, which would be equivalent to introducing the concept of absolute weight associated to a source. In particular, given a weighting system, each vertex $v$ with the length of a chain that has its origin in some reference vertex $p$ of the system and ends in $v$ could be weighted. A possible reference is a minimum of the pre-order. (A minimum of a pre-order is a vertex $q$ such that $q\leq v$, for each vertex $v$.)

**Lemma 13 (minima)** Given a weakly connected transitive triangulation $G = (V,E,p)$ there exist $h \geq 1$ minimum vertices $v_{i_1}, v_{i_2}, \ldots, v_{i_h}$ that induce a complete subgraph $K_h$ the arcs of which all have unit weight.

Demonstration: We recall first of all that a weakly connected transitive triangulation is a total pre-order. We shall first prove that there exists at least one minimum, assuming *ab absurdo* that it does not exist. In this case, taken any vertex v, there exists a vertex $v'$ such that $vv'$, and hence, given the weak connection, $v' \leq v$. Since not even said $v'$ can be minimum, then there exists $v'' \neq v$ such that $v'v''$ and hence $v'' \leq v'$ and $v'' \leq v$. The reasoning can be repeated until all the vertices in V are included, but this leads to identification of a vertex smaller than all the others (the last vertex that has been included). It is hence absurd to assume that a minimum does not exist. Assume now that there exist two minima $v'$ and $v''$. By definition it must necessarily be $v' \leq v''$ and $v'' \leq v'$ and this proves the existence of the induced subgraph $K_2$, with arcs of unit weight. The reasoning may be immediately extended to a number of minima greater than two.

On the basis of the result established by Lemma 13, it appears natural to fix the reference vertex $p$ referred to above as (any) one of the minima. It follows that, if $w$ is said weight function on the vertices, for each arc $(u,v)$ its weight $p(u,v)$ is equal to the ratio $(v)/(u)$. Said weighting is hence fully consistent with the weighting of the arcs expressed by the function $p$ and enables derivation of the values thereof (and vice versa). In actual fact, if instead of w we were to define a $w'$ such that for each vertex $v$ $w'(v)/w(v)=\alpha$, where $\alpha$ is any non-zero constant, we would even so have a weighting function consistent with the weighting of the arcs in so far as it would remain true that, for each arc $(u,v)$, $p(u,v)=w'(v)/w'(u)$. For each weighting on the arcs $p$ there hence exists a family of weighting functions on the vertices, all consistent with $p$. We shall call "normalized weighting" that weighting (consistent with that on the arcs) that attributes unit weight to the minimum.

We have established the following result:

> **Lemma 14 (non-nullity of the minimum).** Given a weakly connected transitive triangulation $G=(V,E,p)$ there exists a family of infinite weighting functions of the vertices of $G$ all consistent with $p$, each of which attributes to the minimum of the transitive triangulation of $G$ a non-zero value, arbitrarily chosen.

Demonstration: It follows from the foregoing considerations and from the observation that the choice of a weight equal to $\gamma \# 0$ to be attributed to the minimum is equivalent to choosing the constant $\alpha$ of modification of the normalized weighting precisely equal to $\gamma$.

We conclude this section observing that the reasoning here developed could be repeated on the subgraphs of a transitive triangulation.

**Existence theorem**

We can now prove that it is possible to define a non-trivial weighting function, in the sense of Definition 1, that satisfies the properties of reflexivity, reciprocity, and triangular equality (TE). To develop the demonstration, it is convenient to interpret the problem in terms of weighting of the arcs of a digraph, through the function $p$, derived from $P$, previously introduced. In this scenario, it is a question of proving that each digraph $G = (V,E)$ admits of a non-trivial weighting function $p$ that satisfies TE (the satisfaction of the other two properties is trivial).

We postulate the following lemma, which establishes an important property of the subgraphs of the transitive triangulation (amongst which transitive closure).

**Lemma 15 (regarding subgraphs).** Given a transitive triangulation $G=(V,E,p)$, the restriction *of p to any subgraph of $G$ will continue to satisfy TE.*

Demonstration: Let us assume that the hypotheses of the lemma are satisfied and we show that it is absurd to confute the statement. We hence assume that there exists a weighting $p$ of $G$ that satisfies TE and we assume ab *absurdo* that there exists $G' = (V',E')$, with $V' \subseteq V$ and $E' \subseteq E$, such that the function $p'$, restriction of $p$ to $G'$, does not satisfy TE. This is equivalent to saying that there exist three distinct vertices in $V'$, designated by $u$, $v$ and $z$, such that $(u,v) \in E'$, $(v,z) \in E'$ and $(u,z) \in E'$, where $p'(u,v)p'(v,z) \neq p'(u,z)$ applies. But, since $p'$ is a restriction of $p$, and since there exist in $E$ the arcs $(u,v)$, $(v,z)$ and $(u,z)$, it follows that $p(u,v)p(vz) \neq p(u,z)$, which is contrary to the hypothesis that $p$ satisfies TE.

Another important lemma enables determination of the properties of the graph obtained by connecting two distinct weighting systems through an arbitrarily oriented and weighted arc (with weight $\geq 1$).

**Lemma 16 (weighting system).** Given two weighting systems $G_1=(V_1,E_1,P_1)$ and $G_2 = (V_2,E_2,P_2)$ and two vertices $v_1 \in V_1$ and $v_2 \in V_2$, the graph weighted on the arcs $G=(V_1 \cup V_2, E_1 \cup E_2 \cup \{(x,y)\}, p_1 \cup p_2 \cup p(x,y)=r)$, $r \geq 1$, is TT-extendible and its transitive triangulation is a *weighting system.*

Demonstration: Lemma 14 has established that the two graphs admit of (infinite) weightings on the vertices. We shall consider the normalized weighting $w_1$ on the vertices of $G_1$. For reasons of consistency, insertion of the arc $(x,y)$ suggests extending $w_1$ so that $w_1(y)=w_1(x) \cdot r$. On the basis of what has been seen in Lemma 14, it is possible to choose a weighting $w_2$ on the vertices of $G_2$, consistent with $p_2$ and that attributes to $y$ the same value: for this purpose, it is sufficient to attribute to one of the minima of $G_2$, let us say $s_2'$ the weight $_2(s_2)=_1(x) \cdot r/p_2(s_2,y)$. We hence arrive at defining a weight function w on the vertices of *G*.

$$(v) = \begin{cases} 1(v) & if\ v \in V_1 \\ 2(v) & if\ v \in V_2 \end{cases}$$

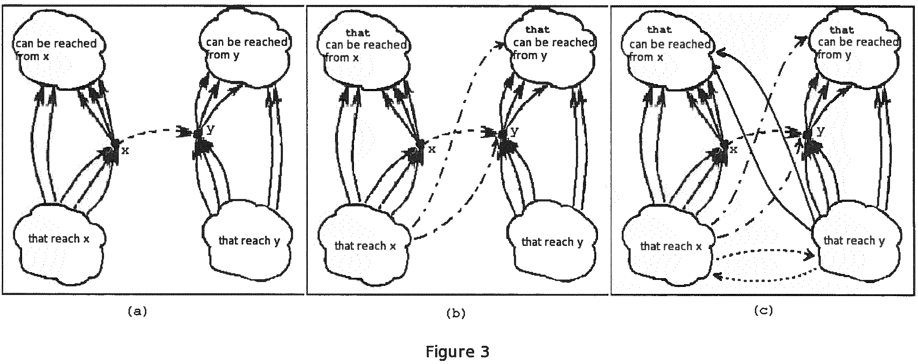

Consider now all the pairs $(u,v) \in V_1 \times V_2$. If $w(v) \geq w(u)$, then the transitive triangulation of *G* will contain the arc *(u,v),* with weight equal to *w(v)/w(u)*; if $w(v) \leq w(u)$, then the transitive triangulation of *G* will contain the arc *(v,u),* with weight equal to *w(u)/w(v).* Figure 3 illustrates the scenario described.

We shall now prove what has been stated previously.

**Theorem 17 (weighting function)** Given a digraph *G* = (V,E), with non-empty *V*, there exists a non-trivial weighting function *p* that satisfies the properties of triangular equality (TE).

Demonstration: We number the arcs of *E* according to an arbitrary order: $E=\{e_1,e_2,...,e_m\}$. We show that it is possible to construct a sequence of graphs $G_0 = (V,\emptyset), G_1 = (V,\{e_1\}), G_2 = (V,\{e_1,e_2\}),...,G_m = (V,\{e_1,e_2,...,e_m\}) = G$ with respective weightings $p_0,p_1,p_2,...,p_m$ that satisfy TE. The weighting $p_m$ will hence be the weighting *p* sought for *G*. The existence of the weightings $p_i$, i = 0,1,...,m, that satisfy TE will be proven by exploiting Lemma 15, showing in particular that each $p_i$ can be constructed as restriction of the corresponding $p_i^{++}$ on the transitive triangulation of $G_i$ that satisfies TE. The proof is by induction on the number of arcs. The basic step, *m* = 0, is verified in a trivial way: $G_0^{++} = G_0^{+} = G_0$ and $p_0^{++}$ is a partial function not defined on any argument and satisfies TE. Assume now that, for $k \geq 0$ and for $i \leq k,$ there exist the transitive triangulations $G_i^{++}$, which admit of a weighting $p_i^{++}$ that satisfies TE. We show how to construct $G_{k+1}^{++}$, and in particular its weighting $p_{k+1}^{++}$ that satisfies TE.

We construct $G_{k+1}^{++}$ starting from $G_k^{++}$. If the arc $e_{k+1} \in E_k^{++}$ then $G_{k+1}^{++} = G_k^{++}$ and hence $p_{k+1}^{++} = p_k^{++}$ is defined; TE is still satisfied.

In the case where $e_{k+1} \notin E_k^{++}$, it is then possible to construct $G_{k+1}^{++}$ starting from $G_k^{++}$ as described in what follows. Assuming $e_{k+1} = (x,y)$, we shall designate by $G_k^{++}$, x the vertices that in $G_k^{++}$ have an outgoing arc pointing towards *x* (that reach *x*) and with $G_k^{++}$, x [?N.B. E' STATA UTILIZZATA LA STESSA NOTAZIONE PER DESIGNARE DUE TIPI DI VERTICI DIVERSI] the vertices that in $G_k^{++}$ have an incoming arc arriving from *x* (that can be reached from *x*); we shall use a similar notation and terminology for the vertices adjacent *to y* in $G_k^{++}$. (Note Figure 3 and, in particular, the fact that $G_k^{++}$ is made up of at least two weakly connected components, with *x* and *y* not belonging to the same component, by virtue of Property 11). The introduction of $e_{k+1}$ enables *x* and all the nodes in $G_k^{++}$, x to reach *y* and all the nodes in $G_k^{++}$, x. It follows that in the transitive closure $G_{k+1}^{+}$ (part of the transitive triangulation) there must be present, in addition to *(x,y),* all the transitive arcs of the type (u,v), with $u \in G_k^{++}$, x and $v \in \{y\} \cup G_k^{++}, y$; said new arcs will determine insertion of other (triangulator and transitive) arcs, and so forth. We are in the conditions of application of Lemma 16, so that it follows immediately that the two components, as a result of insertion of *(x,y),* converge in a single weakly connected component. The consequence is that $G_{k+1}^{++}$ is defined, which proves the statement.

**Algorithms**

In this section, we present some algorithms for management and verification of the TE-UC-digraph and transitive triangulations. Provided for each of them is a pseudo-code and upper bound.

**Representation of transitive triangulations**

It is advisable to represent the transitive triangulation of a graph through an adjacency matrix that, given the asymmetric nature of the relation, can be represented via a triangular two-dimensional array, i.e., only containing only cells *(i,j)* with $i > j$, both ranging from 1 to *n*, via the following convention. The cell *(i,j)* contains information on the arc $(v_i, v_j)$ or else on the arc $(v_j, v_i)$ (owing to asymmetricity, they do not both exist). If there exists the arc $(v_i, v_j)$, then in the cell *(i,j)* the value $p^{++}(v_i, v_j)$ is stored; if there exists the arc $(v_j, v_i)$, then in the cell *(i,j)* the value $-p^{++}(v_j, v_i)$ is stored; in all the other cases, the conventional value 0 is entered in the cell.

The convention adopted leads to the following method of access to the information. If information is to be obtained on the existence of an arc $(v_h, v_k)$ and on its possible weight, we have two cases:

A) case $h > k$ :

- if the cell (h; k) contains a value > 1, the arc exists, and the value of the cell represents the weight thereof (the inverse arc does not exist);
- if the cell (h; k) contains a value = 1, the arc exists, and the value of the cell represents the weight thereof (the inverse arc also exists, with the same weight);
- if the cell (h; k) contains a value < -1, the arc does not exist (the inverse arc exists);
- if the cell (h; k) contains the value 0, the arc does not exist (nor does the inverse arc)

b) case $h < k$ :

- if the cell (k, h) contains a value > 1, the arc does not exist (the inverse arc exists);
- if the cell (k, h) contains a value = 1, the arc exists (the inverse arc also exists, with the same weight);
- if the cell (k, h) contains a value < -1, the arc exists, and the value of the cell, with change of sign, represents the weight thereof (the inverse arc does not exist);
- if the cell (k, h) contains the value 0, the arc does not exist (nor does the inverse arc).

The case $h = k$ is not considered in so far as the DAG does not contain self-loops.

**Incremental construction of transitive triangulations (object of patent)**

From the proof of Theorem 17 it is possible to derive algorithms that support insertion of sources (vertices) and arcs, maintaining a transitively triangulated TE-DAG. In particular, we present an algorithm that maintains at each instant the transitive triangulation of a TE-UC-digraph, when new arcs are inserted. We shall make use of the weighting of the vertices of the graph through a function *w:V IR,* according to Lemma 14, and joining weakly connected components, as illustrated in Lemma 16. Hence, given $V=\{v_1, v_2, ..., v_n\}$, since $|V|=n$, we shall increase the representation of the graph through an array w of *n* values, the *i*-th cell of which contains the weight to be associated to the vertex $v_i$, $i=1,...,n$ and is initialized as {1, 1,..., 1}, to represent that, at the start, in the absence of arcs, $w(v_i)=1$, for $i=1,...,n$.

From a notational standpoint, with reference to Figure 3, we shall designate by *G, x* the vertices that in *G* have an outgoing arc pointing towards *x* (that reach *x*) and by *G, x* [?N.B. E' STATA UTILIZZATA LA STESSA NOTAZIONE PER DESIGNARE DUE TIPI DI VERTICI DIVERSI] the vertices that in $G_k^{++}$ have an incoming arc arriving from *x* (that can be reached from *x*), and likewise for *y.*

It should be noted that, in the case where an arc *(x,y)* is inserted with $r=1$, it becomes necessary, for obvious reasons of consistency, to insert *(y,x)*, once again with weight $r=1$.

**NB:** in the ensuing pseudo-code the names of the algorithms are underlined when they are invoked.

Boolean **Algorithm insertArc** (x, y, r)

```
/* PATENT: CORRECTS THE DIGRAPH AND INSERTS NECESSARY ARCS

- Reference scenario: transitively triangulated TE-UC-

digraph G = (V, E, p), with vertex weighting w

- inserts, if not present, the arc (x,y) with weight r

- propagates the effects of insertion, computing the new

transitive triangulation

- updates vertex weighting w

 */

if (x,y) E return false
```

```
if (y,x) E && p (y,x) 1 return false

if  r == 1 && (y,x) E, symmetricIns = true // it is
necessary to insert the symmetrical arc

else symmetricIns = false

// weight correction coefficient CDC of y */

alpha = w(x)*r/w(y)

// carries out visit of CDC of y updating weights of
vertices

weighCDC(y, alpha)


foreach uG, xG, x{x} // u varies in CDC of x

for each vG, yG,y{y} // v varies in CDC of y

if (u, v) E && (v,u) E

if w(u) > w(v) insSimple(v, u, w(u)/w(v))

else if w(u) < w(v) insSimple(u, v, w(v)/w(u))

else

insSimple(u, v, 1)

insSimple(v, u, 1)


if symmetricIns return insertArc(y, x, 1)

else return true

/* End of Algorithm*/
```

**Algorithm** void **insSimple(x**, y, r)

```
      /*

      - service procedure, functional to insertArc


    - inserts directly in the adjacence matrix the arc (x; y)

    with weight r

    */

    set the cell of adjacenceMatrix associated to the arc (x;

    y) = r

    return
```

**Algorithm** void **weighCDC**(vertex v, double alpha)

```
for each vertex z such that "non-oriented path exists"
between v and z do
w(z) * = alpha;
/* the weight of z, w(z) in the array, is multiplied by
alpha */
return;
```

In practice, it may prove convenient to associate to each arc e inserted ((*x,y*) and all the others inserted during one and the same execution of insertArc by transitivity or as triangulators) the arc *(x,y)* that has "caused" insertion of *e*. This may prove useful for the purposes of a revision of the graph, as explained in the section *Conclusions.* The algorithm *insertArc* has a computational cost $\Theta(n^2)$, by virtue of the nested cycle. If we imagine calling it *m* times, once for each arc to be inserted, we obtain a cost $\Theta(mn^2)$.

**Verification of TE**

Pseudo-code of algorithm for verification of the triangular equality (computational cost $\Theta(|V|^3)$).
Algorithm boolean check3(u, v, z)

```
/* receives at input a UC-digraph G = (V, R, p) and

verifies satisfaction of triangular equality returning true

or false

*/

G^+ = transitiveClosure(G) // first calculates transitive

                           // closure of G: G^+ = (V, E^+, p^+)

for each u V

for each v V, v ! = u

for each z V, z ! = u, z ! = v

if(((u, v) E^+) && ((v,z) E^+) && ((u,z) E^+))

if(!check3(u, v,z)) return false

return true
```

Algorithm boolean check3(u, v, z)

```
/* verifies the triangular inequality on the arc (u,z),

transitive for (u, v) and (v,z) */

return p^+(u, v)*p^+(v,z) = = p^+(u,z)
```

**Calculation of transitive closure**
Pseudo-code of algorithm for calculation of transitive closure (computational cost $\Theta(|V|^3)$)
**Algorithm** (Floyd-Warshall, chap. XXV (Thomas H. Cormen, Charles E. Leiserson, Ronald L. Rivest, and Clifford Stein, Introduction to Algorithms (3rd ed.), MIT Press, 2009) graph **transitiveClosure**(G)

```
/*

- calculates transitive closure of G = (V, E, p)

- assumes any numbering of the vertices in V and that

|V| = = n

- the algorithm calculates a sequence of graphs

G_i = (V, E_i, p_i), of which the last (for i = = n) is the

transitive closure

- the update of the weight function p is an enrichment of

the original algorithm

- from a purely implementation standpoint, it is not

necessary to represent simultaneously all the graphs

calculated: it may be seen immediately that only the last

two of them can be represented; with a little care, it may

be realized that in actual fact it is sufficient to

represent only the last

*/

G_0 = G

for k = 1 to n do

    G_k = G_{k-1}

    for i = 1 to n (i ! = k) do

        for j = 1 to n (j ! = i, j ! = k) do

            if (v_i, v_k) ∈ E_{k-1} && (v_k, v_j) ∈ E_{k-1}

                if (v_i, v_j) ! ∈ E_k

                    E_k = E_{k ∪} (v_i, v_j)
```

```
                        define pₖ(vᵢ, vⱼ)

    = pₖ₋₁ (vᵢ,vₖ)*p ₖ₋₁ (vₖ,vⱼ)

    // for respect of triangular equality (TE)

    return Gₙ
```

**Calculation of transitive triangulation (object of patent)**

Pseudo-code of algorithm for calculating transitive triangulation (computational cost $\Theta(|V|^3)$). It is substantially an enrichment of the one for calculating transitive closure, with the possible addition of transitive triangulator arcs in the innermost cycle.

**Algorithm**

graph **transitiveTriangulation** (G)

```
/* PATENT: CONSTRUCTS THE WEIGHTING SYSTEM

- calculates transitive triangulation of G = (V, E, p)

- assumes any numbering of the vertices in V and that

|V| = = n

- the algorithm calculates a sequence of graphs

G_i = (V, E_i, p_i), of which the last (for i = = n) is the

transitive triangulation

- the update of the weight function p is an enrichment of

the original algorithm

- from a puraly implementation standpoint, it is not

necessary to represent simultaneously all the graphs

calculated: it may be seen immediately that only the last

two can be represented; with a little care it may be

realized that in actual fact it is sufficient to represent
```

```
only the last

*/

G_0 = G

for k = 1 to n do

 G_k = G_{k-1}

    for i = 1 to n (i ! = k) do

      for j = 1 to n (j ! = i, j ! = k) do

          if (v_i, v_j) !∈ E_k

           if (v_i,v_k) E_{k-1} && (v_k, v_j) ∈ E_{k-1}

               E_k = E_k ∪ (v_i, v_j) // inserts transitive arc

               define p_k(v_i, v_j) = p_{k-1}(v_i, v_k)*p_{k-1} (v_k, v_j)

// respect of triangular equality (TE)

             else if (v_i, v_k) ∈ E_{k-1}

&& (v_j, v_k) ∈ E_{k-1}

&& p_{k-1}(i,k) < p_{k-1}(j,k)

               // inserts transitive triangulator

               E_k = E_k ∪ (v_j, v_i)

               // respect of triangular equality (TE)

               define p_k(v_j,v_i) = p_{k-1}(v_i,v_k)/p_{k-1}(v_i,v_k)

             else if (v_i,v_k) ∈ E_{k-1}

&& (v_j,v_k) ∈ E_{k-1}

&& p_{k-1}(i,k) = p_{k-1}(j,k)

               // inserts transitive triangulator

               E_k = E_k ∪ (v_j, v_i)

               define p_k(v_j,v_i) = 1 // respect of triangular

equality (TE)
```

```
// inserts transitive triangulator

E_k = E_k U (v_i, v_j)

define   p_k(v_i,   v_j) = 1   //   respect   of

triangular equality (TE)

return G_n
```

## Conclusions

We have introduced a mathematical model that makes it possible to develop a weighting method implemented by means of a computer system, to understand the main properties thereof, and to support the work of a domain specialist. The approach described is immediately suited to any type of source and enables management of the case of weights of sources whether comparable or not.

In practical cases, the graph that represents the relations between the weights of the sources is not initially known; the initial knowledge is limited to its vertices. The domain specialist can adopt a methodology for evaluating relative weights and, once one has been identified, add the corresponding arc on the digraph (CONFIGURATION STEP). The model defined herein enables, through transitive triangulation, explicit representation on the graph of all the knowledge induced by the new weight so as to prevent entry of contradictory information.

If, in the process of evaluation, the specialist deems that a new weight is to be taken into consideration, which is, however, inconsistent with the weights previously introduced, the model defined enables the anomaly to be detected immediately. Furthermore, the recommendation made in the section *"Incremental construction of transitive triangulations"*, of associating to each arc e the arc g(e) that has determined the presence thereof, provides the specialist with a direct tool for comparison of two items of information that are mutually (either directly or indirectly) contradictory.

It is likewise possible to store in an auxiliary data structure (a digraph having as vertices the inserted arcs e and, as arcs, the pairs *(g(e),* e)) so as to support possible operations of erasure of weights (and hence arcs) previously inserted, also cancelling all the consequences determined by said insertions of arcs.

Finally, as an example of the process of incremental construction, reference may be made to Figure 1(b): this shows an impossibility of definition of the weight between the arcs w and u due to a subjective and inconsistent assignment of weights to the existing arcs by the analyst who is a domain specialist. The same error is found in Figure 2(b), which, however, as a whole, shows how the closure algorithm and the transitive-triangulation algorithm insert in an incremental way the arcs assigning thereto correct and unique weights.

## Claims

1. An automated method, implemented via a computer system, for retrieving from any computer or computerized system for management and classification of knowledge, in an orderly way according to relative and absolute importance, defined as "weighting", documents regarding one or more specific domains, belonging to digital documental assets understood as the set of the documents that constitutes the knowledge produced by a subject, body, or plurality of subjects, said method being **characterized in that** it envisages the following steps:

   A) a configuration step in which a user who is a specialist in a domain of knowledge in the juridico-legal field, the fiscal field, health, technological support, environment and territory, science, education, the literary field, etc., defines numerical values to assign to the relations of weight (i.e., of importance) between different documental sources available in a knowledge-management system, and configures a matrix of binary relations, two by two, between each source of knowledge and all the other sources that he wishes to take into consideration;
   B) an automatic triangulation step at the end of the previous step, in which the configuration made by the user according to subjective evaluations is immediately processed in the weighting system with automatic execution by means of any processing system and without any need for human supervision, of the following algorithms:

   1) a transitive-closure algorithm that effects incremental creation and transitive closure of an ordered and acyclic digraph deriving from the configuration matrix, obtained by means of objective evaluation of the weights assigned by the user in point A) and their possible correction, as well as insertion of new correct weights instead of the incongruent or missing ones;

2) a transitive-triangulation algorithm that effects the transitive triangulation of the ordered and acyclic digraph obtained in the previous point A) in order to obtain a relative, i.e., partial, pre-order;

3) an algorithm for weighted-arc insertion that effects construction of an absolute acyclic digraph obtained from the pre-order calculated in the previous point B) composed with every other configuration of weight of the sources already present in the weighting system in order to obtain an absolute order of all the sources present in the knowledge-management system; and

C) a final step in which, following upon a query made by the users of any knowledge-management system (where all the documents are classified) in natural language for retrieving in the documental assets a list of results that are semantically relevant to the text of the query, the knowledge-management system orders said results according to classic rules of knowledge management, such as the date of the document and the relevance of the subjects treated with respect to the text of the query, and sends the list of the results, before it is returned to the user who has made the query, to the source-weighting system, which carries out one or more re-orderings, modifying the 'ranking', on the basis of the configurations present: type of source, relations between the sources, the author/publisher, the territory of origin of the document, and so forth, so as to cause the most important results 'to rise' in the list even when they do not have the highest index of relevance or the most recent date so as to present to the user who has made the query, by means of any digital display system, a new ordering of the results, eliminating any possible inconsistency between the data retrieved and reducing the maximum computational value (*upper bound*) of the algorithms to the advantage of the processing speed;

the system of algorithms that implement the method of weighting of the documental sources being altogether independent of the systems for management and classification of knowledge, even though it operates on the results produced by the latter in response to the queries of the users.

2. The automated method as per Claim 1, **characterized in that** in the configuration step A) the user assigns integers to pairs of sources in order to indicate which of the two has greater weight: F1 vs $F_2 = x$, which reads as: source F2 has a weight that is x times that of source F1, i.e., source F1 weighs 1/x of source F2.

3. The automated method as per Claim 1, **characterized in that** the transitive-closure algorithm is the following:
**Algorithm** graph **transitiveClosure**(G)

```
/*
- calculates transitive closure of G = (V, E, p)
- assumes any numbering of the vertices in V and assumes
that |V| == n
- the algorithm calculates a sequence of graphs G_i =
(V, E_i, p_i), of which the last (for i == n) is the
transitive closure
- the update of the weight function p is an enrichment of
the original algorithm
*/
G₀ = G
for k = 1 to n do
    Gₖ = Gₖ₋₁
    for i = 1 to n (i != k) do
        for j = 1 to n (j != i, j != k) do
            if (vᵢ, vₖ) Є Eₖ₋₁ && (v_k, v_j) Є Eₖ₋₁


                            if (vᵢ, vⱼ) ! Є Eₖ
                                Eₖ = Eₖ ᵤ (vᵢ, vⱼ)
                                define pₖ(vᵢ, vⱼ)
        = pₖ₋₁ (vᵢ,vₖ)*p ₖ₋₁ (vₖ,vⱼ)
            // for respect of triangular equality (TE)
            return Gₙ
```

4. The automated method as per Claim 1, **characterized in that** the transitive-triangulation algorithm is the following:
   **Algorithm** graph **transitiveTriangulation** (G)

```
/* CONSTRUCTS THE WEIGHTING SYSTEM
- calculates transitive triangulation of G = (V, E, p)
- assumes any numbering of the vertices in V and assumes
that |V| == n
- the algorithm calculates a sequence of graphs G_i =
(V, E_i, p_i), of which the last (for i == n) is the
transitive triangulation
- the update of the weight function p is an enrichment of
the original algorithm
*/
G_0 = G
for k = 1 to n do
 G_k = G_{k-1}
    for i = 1 to n (i != k) do
     for j = 1 to n (j != i, j != k) do
         if (v_i, v_j) !∈ E_k
          if (v_i,v_k) E_{k-1} && (v_k, v_j) ∈ E_{k-1}
              E_k = E_k U (v_i, v_j) // inserts transitive arc
              define p_k(v_i, v_j) = p_{k-1}(v_i, v_k)*p_{k-1} (v_k, v_j)
// respect of triangular equality (TE)
             else if (v_i, v_k) ∈ E_{k-1}
&& (v_j, v_k) ∈ E_{k-1}
```

```
&& p_{k-1}(i,k) < p_{k-1}(j,k)
                // inserts transitive triangulator
                E_k = E_k U (v_j, v_i)
                // respect of triangular equality (TE)
                define p_k(v_j,v_i) = p_{k-1}(v_j,v_k)/p_{k-1}(v_i,v_k)
            else if (v_i,v_k) ∈ E_{k-1}
&& (v_j,v_k) ∈ E_{k-1}
&& p_{k-1}(i,k) = p_{k-1}(j,k)
                // inserts transitive triangulator
                E_k = E_k U (v_j, v_i)
                define p_k(v_j,v_i) = 1 // respect of triangular
equality (TE)
                // inserts transitive triangulator
                E_k = E_k U (v_i, v_j)
                define p_k(v_i, v_j) = 1 // respect of triangular
equality (TE)
    return G_n
```

5. The automated method as per Claim 1, **characterized in that** the algorithm for weighted-arc insertion is the following:
   **Algorithm** boolean **insertArc**(x, y, r)

```
/* CORRECTS THE DIGRAPH AND INSERTS NECESSARY ARCS
- Reference scenario: transitively triangulated TE-UC-
digraph G = (V, E, p), with vertex weighting w
- inserts, if not present, the arc (x,y) with weight r
- propagates the effects of insertion, calculating the new
transitive triangulation
- updates vertex weighting w
 */
if (x,y) E return false
if (y,x) E && p(y,x) 1 return false
```

```
if r == 1 && (y,x) E symmetricIns = true // it is necessary
to insert the symmetrical arc
else symmetricIns = false
// weight-correction coefficient of CDC of y
alpha = w(x)*r/w(y)
// effects visit of CDC of y updating weights of vertices
weighCDC(y, alpha)


foreach uG, xG,x{x} // u varies in CDC of x
for each vG, yG,y{y} // v varies in CDC of y
if (u,v) E && (v,u) E
if w(u) > w(v)  insSimple(v, u, w(u)/w(v))
else if w(u) < w(v)  insSimple(u, v, w(v)/w(u))
else
insSimple(u, v, 1)
insSimple(v, u, 1)


if symmetricIns return  insertArc(y, x, 1)
else return true
/* End of Algorithm*/
```

**6.** The method as per the preceding claims, **characterized in that** the transitive-closure algorithm, the transitive-triangulation algorithm, and the algorithm for weighted-arc insertion can be described in any programming language and can be compiled with any compiler suited to being executed by any processing system.

**7.** The automated method as per Claim 1, **characterized in that** the system for assigning a weight to the source of information, referred to as "source weight", of step c), enables relative and absolute orderings between two or more items of information that have been digitally filed, stored, classified, processed, and displayed by means of any computer system.

**8.** The automated method as per the preceding claims, **characterized in that** the construction, management, and updating of the relative weights of the sources enables construction and storage of matrices for relative and/or absolute weighting of the sources with consistent values and, in particular, values that respect the transitive triangular property whereby, given three sources A, B and C, if the weight of source A with respect to that of source B is $P_AB$, and if the weight of B with respect to C is $P_BC$, then the weight $P_AC$ of A with respect to C cannot be different from $P_AB*P_BC$ (and corresponding inverse formulae).

**9.** The automated method as per the preceding claims, **characterized in that** it can be implemented in a software system, provided or not with user interface, suited to being executed on any digital computer, processor of digital information, or processing device of a fixed type or portable type.

**10.** The automated method as per the preceding claims, **characterized in that** it can be implemented by means of a software written in any programming language that is able to return to the user, who effects a request for information in natural language, a list of results ordered according to the weight, or importance, established by means of criteria set by the user of the method himself.

**11.** The automated method as per Claim 1, **characterized in that** during the triangulation step, if in a configuration matrix defined by a user for setting in binary relation, two by two, by means of numbers denoted by upper-case letters, a certain number of sources denoted by lower-case letters

|   | u | z | w | v |
|---|---|---|---|---|
| u | [0] | [X] | [0] | [Y] |
| z | [0] | [0] | [0] | [Y/X] |
| w | [0] | [Z] | [0] | [JZ/Y] |
| v | [0] | [Z/W] | [0] | [0] |

owing to a subjective error of evaluation, typical of a human configuration, the pair of sources (z, v) or (v, z) does not have congruent values in so far as they are not one the inverse of the other, the error in the matrix is corrected, and the missing weights between the various sources are calculated (by means of the triangulation algorithm) and added, to obtain at the end a congruent configuration that respects all the weights configured and is objective

|   | u | z | w | v |
|---|---|---|---|---|
| u | [0] | [X] | [0] | [Y] |
| z | [0] | [0] | [-X/Z]→ | [Y/X] |
| w | [0] | [0] | [0] | [JZ/Y] |
| v | [0] | [0] | [0] | [0] |

populating, in the final matrix of the relations, only its top right triangle, inverting number and sign of the relation (z, w), thereby obtaining reduction of the maximum computational value *(upper bound)* of the algorithms to the advantage of the processing speed.

**12.** The automated method as per the preceding claims, **characterized in that**, whenever the user modifies the configuration of the weights, or importance, of the information present in the knowledge system, the weighting system acquires the new configuration and automatically processes it to reconstruct the partial orders and the global one of all the sources.

**13.** An automated method implemented by means of a computer according to all the preceding claims, **characterized in that**, when the entire graph that represents the relations between the weights of the sources is not initially known and the initial knowledge is limited to its vertices, through transitive triangulation, it is possible to represent explicitly on the graph all the knowledge induced by a new weight so as to prevent entry of contradictory information.

**14.** The automated method according to all the preceding claims, **characterized in that** the association between each arc e and the arc g(e) that has determined the presence thereof provides the specialist with a direct tool for the comparison of two items of information that are mutually (directly or indirectly) contradictory.

**15.** The automated method as per the preceding claims, **characterized in that** it envisages storing in an auxiliary data structure each digraph having as vertices the arcs e inserted and, as arcs, the pairs (g(e), e)) so as to support possible operations of erasure of weights previously inserted, also cancelling all the consequences automatically determined by said insertions.

Figure 1

Figure 2

Figure 3

EP 2 757 505 A1

Europäisches
Patentamt

European
Patent Office

Office européen
des brevets

## EUROPEAN SEARCH REPORT

Application Number

EP 14 15 2198

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/103938 A2 (VEVEO INC [US]; ARAVAMUDAN MURALI [US]; RAJASEKHARAN AJIT [US]; RAMAKR) 13 September 2007 (2007-09-13) * the whole document * | 1-15 | INV. G06N5/00 G06F17/30 |
| A | EINAT MINKOV ET AL: "Improving graph-walk-based similarity with reranking", ACM TRANSACTIONS ON INFORMATION SYSTEMS, vol. 29, no. 1, 1 December 2010 (2010-12-01), pages 1-52, XP055087372, ISSN: 1046-8188, DOI: 10.1145/1877766.1877770 * the whole document * | 1-15 | |
| A | US 6 006 218 A (BREESE JOHN S [US] ET AL) 21 December 1999 (1999-12-21) * abstract * | 1-15 | |
| A | STEPHEN ROBERTSON ET AL: "Simple BM25 extension to multiple weighted fields", PROCEEDINGS OF THE THIRTEENTH ACM CONFERENCE ON INFORMATION AND KNOWLEDGE MANAGEMENT , CIKM '04, 1 January 2004 (2004-01-01), page 42, XP055087385, New York, New York, USA DOI: 10.1145/1031171.1031181 * the whole document * | 1-15 | TECHNICAL FIELDS SEARCHED (IPC) G06N G06F |

The present search report has been drawn up for all claims

| Place of search | Date of completion of the search | Examiner |
|---|---|---|
| The Hague | 29 April 2014 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                     EP 14 15 2198

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2014

| Patent document cited in search report | | Publication date | Patent family member(s) | | Publication date |
|---|---|---|---|---|---|
| WO 2007103938 | A2 | 13-09-2007 | US | 2007219984 A1 | 20-09-2007 |
| | | | US | 2007219985 A1 | 20-09-2007 |
| | | | US | 2007266021 A1 | 15-11-2007 |
| | | | US | 2007266026 A1 | 15-11-2007 |
| | | | US | 2007271205 A1 | 22-11-2007 |
| | | | US | 2007276773 A1 | 29-11-2007 |
| | | | US | 2007276821 A1 | 29-11-2007 |
| | | | US | 2007276859 A1 | 29-11-2007 |
| | | | US | 2009217203 A1 | 27-08-2009 |
| | | | US | 2010121845 A1 | 13-05-2010 |
| | | | US | 2010241625 A1 | 23-09-2010 |
| | | | US | 2010293160 A1 | 18-11-2010 |
| | | | US | 2010325111 A1 | 23-12-2010 |
| | | | US | 2011004572 A1 | 06-01-2011 |
| | | | US | 2011022587 A1 | 27-01-2011 |
| | | | US | 2011131161 A1 | 02-06-2011 |
| | | | US | 2011154264 A1 | 23-06-2011 |
| | | | US | 2012060119 A1 | 08-03-2012 |
| | | | US | 2012060120 A1 | 08-03-2012 |
| | | | US | 2012066611 A1 | 15-03-2012 |
| | | | US | 2012197893 A1 | 02-08-2012 |
| | | | US | 2013167169 A1 | 27-06-2013 |
| | | | US | 2013191374 A1 | 25-07-2013 |
| | | | US | 2013246408 A1 | 19-09-2013 |
| | | | US | 2013318080 A1 | 28-11-2013 |
| | | | US | 2013325843 A1 | 05-12-2013 |
| | | | WO | 2007103938 A2 | 13-09-2007 |
| US 6006218 | A | 21-12-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTOPHER D. MANNING ; PRABHAKAR RAGHAVAN ; HINRICH SCHÜTZE.** Introduction to Information Retrieval. Cambridge University Press, 2008
- **BERND S. ; W. SCHRODER.** Ordered sets: An introduction. Birkhauser, 2003
- **THOMAS H. CORMEN ; CHARLES E. LEISERSON ; RONALD L. RIVEST ; CLIFFORD STEIN.** Introduction to Algorithms. MIT Press, 2009